# EUROPÄISCHE PATENTSCHRIFT

(11) **EP 1 746 698 B1**
(45) Veröffentlichungstag und Bekanntmachung des Hinweises auf die Patenterteilung: **09.04.2008**
(21) Anmeldenummer: 06013700.7
(22) Anmeldetag: 01.07.2006
(51) Int. Cl.: H02G 3/22, H02G 15/04

(54) **Kabeldurchführung mit Membranventil**
Cable grommet with a membrane valve
Presse étoupe avec valve à membrane

(30) Priorität: 19.07.2005 DE 202005011301 U
(43) Veröffentlichungstag der Anmeldung: 24.01.2007
(73) Patentinhaber: Hidde, Axel R., 57076 Siegen (DE); Klose, Odo, 42285 Wuppertal (DE)
(72) Erfinder: Hidde, Axel R., 57076 Siegen (DE); Klose, Odo, 42285 Wuppertal (DE)

(56) Entgegenhaltungen:
- EP-A- 1 202 616
- EP-A2- 1 220 407
- GB-A- 1 163 901

## Beschreibung

Die Erfindung betrifft eine Kabel-/Schlauchdurchführung zur mechanisch und einseitig hydroskopisch dichten Durchführung eines geschirmten oder ungeschirmten elektrischen Kabels mit/ohne Zugentlastung mit/ohne Biegeschutz für dieses Kabel.

Kabel-/Schlauchdurchführungen in geschlossene Gehäuse, mit und ohne Zugentlastung, auch wasser- und explosionsgeschützter Art und mit/ohne elektromagnetischer Abschirmung mit/ohne Biegeschutz nach Schutzart klassifiziert, sind aus dem Stand der Technik bekannt. Derartige Kabeldurchführungen sind auch bekannt unter anderen technischen und kommerziellen Begriffen, wie Kabel-/Leitungs-Durchführung, --Durchführungseinrichtung, -Durchführungsverschraubung, --Durchführungsvorrichtung, --Einführung, --Einführungseinrichtung, -Einführungsverschraubung, --Einführungsvorrichtung, --Verschraubung, Schlauchverschraubung, etc.

Derartige Kabel-/Schlauchdurchführungen werden für unterschiedlichste Anwendungen benötigt und sind entsprechend vielfältig ausgeformt. Sie werden je Verwendungszweck aus Kunststoff und/oder Metall hergestellt, enthalten zusätzliche Scheiben und/oder Dichtungen/Dichtringe/Tüllen und unterschiedliche Zugentlastungen nach Anforderung, wie Quetschung oder Schelle. Kabeldurchführungen und/oder ihre Einzelteile sind genormt; in der Installationstechnik werden Kabeldurchführungen alter Bauart unter der Bezeichnung Panzerrohrgewinde (Pg)-Verschraubung mit nichtmetrischem Gewinde, Pg7 ... Pg48, entsprechend neuer Bauart mit metrischem Gewinde M12 ... M63, gehandelt.

Kabel-/Schlauchdurchführungen bestehen aus einem Abschnitt Zylinder mit meist beidseitigem Gewinde und einem Anschlag, der den dichtenden Abschluß zu einer Wandung bildet. Zur Befestigung wird entweder der Abschluß mit der Wandung verschraubt - der Abschluß enthält umlaufend Bohrungen - oder der Zylinder wird wandungsrück-/gehäuseseitig mit einer Gegen-/Kontermutter verschraubt. Auf der Seite der Kabeleinführung gibt es entweder eine Kabeltülle mit Dichtung und Scheibe und/oder eine angespritzte oder lose Kabelkralle, wobei das Kabel durch eine Hutmutter dichtend gequetscht wird, oder auch eine Schraubschelle mit Dichtung und angespritztem Kabelbiegeschutz. Zubehörteile sind bekannt als Dichtungs-/Würgenippel und BlindstopfenNerschlußschrauben.

Die Anwendungen erstrecken sich von Anschluß-, Schalt- und Verteilerkästen der Installations-/Gerätetechnik der Gebäudesystem- und Anlagentechnik bis zu Anwendungen der Luft- und Raumfahrt, der Verkehrstechnik sowie maritimen Anwendungen. Aufgrund der Vielfältigkeit der Applikationen wird die obige, grobe Beschreibung nicht vertieft.

Im folgenden wird der Stand der Technik bezogen auf die Kabel-/Leitungs-/Schlauchdurchführungen gewürdigt.

Gebrauchsmusterschrift DE 91 10 007/europäische Patentschrift EP 527 368 betrifft eine Kabeldurchführungsvorrichtung zur elektromagnetisch dichten Durchführung eines geschirmten elektrischen Kabels durch eine Trennwandöffnung mit im Durchführungsbereich von einem Kabelmantel freigelegten elektrischen Schirm und mindestens zwei in radialer Richtung ansetzbaren, elektrisch leitenden Teilschalen, deren Innenprofil an das Außenprofil des Schirms angepaßt ist.
Das Schutzrecht betrifft die elektromagnetische Abschirmung bei Kabeln und Durchführungen.

In der deutschen Offenlegungsschrift DE 42 02 176/europäische Patentschrift EP 553 766 wird ein Kabelsteckverbinder und eine Kabeldurchführungsvorrichtung mit frei wählbarer Kabelabgangsrichtung vorgestellt, aufweisend ein Gehäuse, das einen Kabelabgangsbereich bzw. Durchbruchbefestigungsbereich und einen Kontaktbereich einschließt, wobei der Kabelabgangsbereich ein Kugelgelenk aufweist, durch welches ein mit dem Kontaktbereich verbundenes Kabel hindurchgeführt ist.
Die Anmeldung betrifft bewegbare oder einstellbare Kabelabgänge, Kabelsteckverbinder und Kabeldurchführungen.

Gebrauchsmuster DE 202 10 296 offenbart eine fluiddichte Kabeldurchführung derart, daß die elektrischen Einzelleitungen eines Kabels an der Stelle des Durchführungskörpers durch ein Dichtelement innerhalb eines anschraubbaren Schlauchanschlusses geführt werden.
Ein Luftdruckausgleich mit dem Geräteinnenraum wird nicht diskutiert.

Das deutsche Gebrauchsmuster DE 299 18 401 stellt eine Kabeldurchführung innerhalb des Türscharniers von Gargeräten vor, wobei das Kabel durch den Scharnierbolzen und die -platte geführt werden.
Eine Fremdbelüftung des Türscharniers ist nicht vorgesehen.

Gemäß deutscher Patentschrift DE 102 23 198/europäisches Patent EP 1 365 494 wird eine metallene, an diversen Druckstellen des Kabelmantels mit Kunststoff überzogene Kabeldurchführung an einem Elektrogerät, insbesondere in einem Schienenfahrzeug, vorgestellt, wobei das Kabel durch ein Kabelführungsrohr geführt wird und mindestens an einer Anlagefläche durch eine Druckschraube haltend verpreßt wird.
Die Offenbarung beschränkt sich auf die Erklärung der dichtenden Kabeldurchführung.

Patentschrift DE 101 55 434 betrifft eine Kabeldurchführung durch eine Schirmungswand mit gegenüberliegenden Offnungsrändern mit Befestigungs- und Kontaktierungsmitteln, um ein durchzuführendes Kabel an beiden gegenüberliegenden Öffnungsrändern zu befestigen und zu kontaktieren, wobei die durch die Öffnung beeinträchtigte Schirmwirkung durch das montierte Kabel verringert wird.
Die Öffnung selbst wird nicht zusätzlich durch Dichtungsmittel verschlossen.

Das Gebrauchsmuster DE 93 14 819/internationale Anmeldung WO 1995 9 462 Kabeldurchführung bei einem elektrischen Gerät' betrifft die Feuchtigkeits-Abdichtung des Kabeleingangs in Verbindung mit einer Zündspule. Das Silikonkabel wird an der Durchtrittsstelle mit einer Dichtmasse aus zähelastischer Vergußmasse sowie zwei kabelumhüllende Halbschalen gegen Feuchte isoliert.
Das elektrische Gerät ist ansonsten voll vergossen.

Gebrauchsmusteranmeldung DE 90 04 686 betrifft die Abschirmung zur elektromagnetischen Verträglichkeit mit Metallgeflecht umhüllter elektrischer Kabel oder Leitungen. Ein Einlegeteil mit spitzen Federzungen umringt zwecks elektrischer Abschirmung Gehäuseöffnung und Kabelmetallgeflecht.
Der elektrische Geräteraum wird nicht weiter betrachtet.

Die deutsche Patentschrift DE 37 01 597 beschreibt die Kabeldurchführung durch die Stirnwand eines Kraftfahrzeugs. Die Kabeldurchführung vollzieht sich unmittelbar neben dem Lenkungsdurchtrittsloch und wird mittels einer elastischen Tülle verschlossen.
Dieser Verschluß weist nur eine niedrige Dichtigkeitsstufe auf.

Patentschrift DE 31 41 999 offenbart eine flüssigkeitsdichte Kabeldurchführung für ein oder mehrere Verbindungskabel zwischen einem, in dem Strömungsmedium einer hydraulischen Regeleinrichtung eingetauchten elektrischen Bauteil und einem, auf der Außenseite des das Strömungsmedium enthaltenen Gehäuses angebrachten Reglers oder dergleichen, wobei die Verbindungsvorrichtung einen Austritt des Strömungsmediums auf die Außenseite des Gehäuses über das oder die Kabel verhindert und gleichzeitig zu dieser Dichtfunktion eine elektrische Kabelverbindung ermöglicht.
Auf eine Kompensation hydrostatischen oder pneumatischen Drucks wird an dieser Stelle nicht eingegangen.

In dem Patentexposé DE 30 28 800 wird eine Kabelverschraubung für geschirmte, elektrisch leitende Wände durchlaufende Kabel, insbesondere für Anwendungen im Schiffsbereich, vorgeschlagen. Dazu wird das Kabel vom Kabelgeflecht befreit und über zwei Halbschalen, die wiederum beidseitig von zwei Metallhülsen gehalten werden, durch die Metallwand geführt. Beidseitig in die Wand eingelassene Flanschausbildungen mit eingedrehten Schraubbuchsen fixieren die Kabeldurchführung und stellen eine durchgängige Abschirmung sicher.
Der Anspruch auf zusätzliche Feuchtekompensation wurde nicht gestellt.

Die schweizerische Patentschrift CH 491 475/deutsche Offenlegungsschrift DE 18 15 425 betrifft eine wasserdichte Kabeldurchführung für Installationszwecke mit einem Einführungsstutzen, einer auf diesen Stutzen mit Außengewinde aufgeschraubten und mit einer Bohrung für die Durchführung des Kabels versehenen Kappe und einem gegen den Kabelmantel gepreßten Einsatz-/Dichtring. Als Vorteil der vorliegenden Erfindung wird die kurze Bauform des Einführungsstutzens genannt.
Eine Be-/Entlüftung des Elektro-Geräteraums ist nicht beabsichtigt.

Die europäische Anmeldung EP 1 293 021/deutsche Anmeldung DE 199 62 151 betrifft eine Kabeldurchführung für Schaltschränke, insbesondere den Bodenein-/-auslaß betreffend, derart, daß die Kabeleinführung durch Profilstücke mit in Profilrichtung verlaufenden Nuten und Verschlußblechen gebildet wird.
Schaltschränke, z.B. für industrielle Anwendungen, weisen nicht den Dichtigkeitsanspruch auf; eine Forderung auf Wasser- oder Explosionsschutz ist nicht gestellt.

In der europäischen Anmeldung EP 1 157 894/japanische Anmeldung JP 2000 149 166 wird eine Faltenbalg-Kabeldurchführung, insbesondere für die Anwendung im Automobilbereich, z.B. in Verbindung mit Türen oder sonstigen beweglichen Teilen, vorgestellt. Der Faltenbalg enthält bestimmte, den Karosserieteilen angepaßte Befestigungsvorrichtungen und entsprechend den Erfordernissen vorgeformte Kabelführungen.
Da der Balg offen geführt wird, ist der Anspruch auf Dichtigkeit nicht gegeben.

Die europäische Patentschrift 869 303/deutsche Anmeldung DE 197 14 150 sieht eine Vorrichtung zum Verschließen einer Kabeldurchführung in Trennwänden mit mindestens einem, durch die Trennwandöffnung geführten Kabel mit Abstand umschließenden, in Achsrichtung teilbaren Rahmen vor, der auf die Trennwand aufgesetzt und an dieser befestigt ist, und mit zwischen den Kabeln und dem Rahmen eingelegten Brandschutzfüll- und -packstücken, auch Brandschutzkissen genannt, um einen Flammen- und Rauchgasdurchschlag durch die Kabeldurchführung zu verhindern.
Die semipermeable Kabeldurchführung ist hier nicht angesprochen.

Die internationale Anmeldung WO 2002 2 362/deutsche Anmeldung DE 100 31 811 sieht eine Kabeldurchführung zwischen Naß- und Trockenraum in einer Kraftfahrzeugtür vor, wobei die Kabelführung vorzugsweise einzig im Randbereich der Lautsprecheröffnung anzusiedeln ist.
Eine druckfeste Dichtigkeit zwischen Naß- und Trockenraum der Fahrzeugtür ist nicht gefordert.

Im folgenden wird der Stand der Technik bezogen auf die Kabel-/Leitungs-/ Schlaucheinführungen gewürdigt.

Die österreichisches Patentschrift AT 266 241 sieht eine Kabeleinführung mit Membran-Durchsteckdichtung und Schlauchklemmung zur Zug- und Druckentlastung vor. Das Oberteil der Kabeleinführung besteht aus dem Kabeleinführungsstutzen und der angespritzten, den Kabelmantel umschließenden Dichtungsmembran als zusammengehörende Einheit. Weiterhin kann den Kabeleinführungsstutzen um das durchgeführte Kabel eine Schlauchklemme umgeben.
Die angespritzte Membran des Kabeleinführungsstutzens umschließt den Kabelmantel dicht; hat aber mit der Dichtheit des Gehäuses nichts gemein.

Die Patentschrift AT 245 079 sieht eine wasserdichte Kabeleinführung in elektrische Geräte, Verteilergehäuse oder dgl. vor, wobei zur besseren Kabelführung und Halterung sowie Abdichtung gegen Wasser der einstückige Dichtungsnippel im Bereich seiner Enden je mit einer membranartigen, gegen den Kabelmantel dichtenden Wand versehen ist.
Eine darüber hinaus gehender Druckausgleich ist nicht vorgesehen.

Die Patentschrift AT 204 618 offenbart eine wasserdichte Kabeleinführung für Gehäuse elektrischen Installationsmaterials, insbesondere für Kabelverteilungsdosen oder dgl., wobei in genormte Einführungsstutzen anstelle einer mehrteiligen Stopfbuchsenverschraubung ein einstückiger, aus elastischem Kunststoff bestehender Schraubnippel eingesetzt ist, der eine Rändelung zum Angreifen eines Werkzeugs, eine Abdichtung hin zum Gehäuse durch Schraubdichtung sowie eine mit einer Öffnung versehene Wand aufweist, in die ein Kabel wasserdicht verschlossen eingeführt werden kann.
Die semipermeable Kabeldurchführung ist hier nicht angesprochen.

Die Patentschrift CH 407 277 beschreibt eine kostengünstige, mit Zugentlastung versehene, dichte Kabeleinführung an einem Gehäuse für elektrische Geräte oder Maschinen derart, daß eine Durchführungstülle aus elastischem Kunststoff, mit einer in einen entsprechenden Durchbruch des Gehäuses zu verjüngende Fläche, und an der Innenseite Vorsprünge besitzt und mindestens einen Schlitz aufweist, durch welchen sie federnd zusammendrückbar ist
Ein Druckausgleich für den Innen-/Außenraum ist nicht gefordert.

Die deutsche Patentschrift DE 689 21 946/europäische Schrift EP 359 151 offenbart eine Methode und eine Vorrichtung zur Herstellung eines linearen Körpers, z.B. eine elektrische Leitung, mit wasserdichter Kabeleinführung. Die wasserdichte Kabeleinführung besteht aus einer der Leitung aufgepreßten, aus elastischem Material hergestellten Leitungs- oder Kabelmuffe, die passend in das Gehäuse eines elektrischen Geräts eingefügt werden kann. Weiterhin wird eine Fertigungsvorrichtung dafür gezeigt.
Die Feuchteisolation wird angesprochen, jedoch gibt es keinen Hinweis auf Feuchtebildung und -abfuhr durch den Taupunkt.

Das Gebrauchsmuster DE 298 23 871 beschreibt einen Schaltschrank mit Kabeleinführung, vorzugsweise in der Bodenwand, bestehend aus mit Schaumstoff bestückten, aufreih- und verbindbaren Kabeleinführungselementen.
Weitere, nicht zugentlastete Anordnungen zur Kabeleinführung in Schaltschränke, auch spritzwassergeschützter Ausführungen, sind in den Gebrauchsmusteranmeldungen DE 203 16 988, DE 88 09 922, DE 86 14 949 und DE 85 00 370, der Offenlegung DE 199 62 151 und der internationalen Anmeldung WO 2001 45 219/ deutsche Anmeldung DE 199 62 151 veröffentlicht.
Eine Zugentlastung und/oder ein Temperaturausgleich sind nicht vorgesehen.

Gebrauchsmuster DE 296 19 366 schlägt eine Kabeleinführung für Gehäuse, insbesondere für Gehäuse von Befehls- und Meldegeräten oder Sicherheitspositionsschaltern vor, die aus einem in das Gehäuse gebrachten Bohrung mit Innengewinde und Verjüngung sowie einem Endstück mit dazu passendem Außengewinde und Kabeldichtring mit Kunststoffring als Verdrehschutz, wobei das eingeführte Kabel mit dem übergestülptem Dichtring durch das Endstück dicht und zugentlastet verschraubt werden.
Eine Gehäusebelüftung wird nicht angesprochen.

Mit der deutschen Offenlegungsschrift DE 101 05 810/europäische Anmeldung EP 1 231 693 wird eine einstückige Kabeleinführung in ein Installationsgerät, insbesondere ein Einspeisegehäuse und dergleichen, vorgeschlagen mit einem in eine Seitenwandung des Installationsgeräts einsetzbaren Wandabschnitt, der wenigstens eine stufig konische, von der Ebene des Wandabschnitts auf dessen einer Seitenfläche aus vorspringende Ausbuchtung aufweist, deren Spitze eine Öffnung umgibt, wobei die Ausbuchtung je nach Kabeldurchmesser an gewünschter Stufe abschneidbar ist. Ein thermischer Lüftungsausgleich ist nicht vorgesehen.

Eine bewegliche, zugentlastete Kabeleinführung für elektrische, ortsveränderliche Geräte mit flexibler Anschlußleitung wird in den Gebrauchsmusteranmeldungen DE 89 02 118 sowie DE 85 10 181/europäische Anmeldung EP 203 309 angesprochen. Für das elektrische Gerät wird nicht der Anspruch auf Dichtheit erhoben.

Die europäische Anmeldung EP 1 385 248 stellt ein geschütztes Gehäuse für elektrische und/oder elektronische Geräte vor, welche über eine wasser- und gasdichte Kabeleinführung verfügt.
Die Einrichtung verfügt nicht über atmungsaktive Organe.

Das europäische Patent EP 627 132 stellt eine dichtende Kabeleinführung/zu formende Tülle vor, bestehend aus elastischem Material, ähnlich einer abgewickelten Schelle ist ein Ende nach feststehender/m Anzahl und Durchmesser unterschiedlicher, einsteckbarer Kabel offen ausgeformt während das andere Ende aus einer zu umwickelnden Schlaufe besteht, die sich in ihrer Breite und ihrer Länge nach einseitig verjüngt. Sind die nach Anzahl und Durchmesser unterschiedlichen Kabel aufgenommen, wird die Anordnung mit dem Schlaufenende derart umwickelt, daß die vorgesehene Kabeldurchführung dicht verschlossen ist. Es ist weiterhin möglich, neben kreisrunden Bohrungen auch z.B. ovale/ellipsenförmige Kabeleinführungen zu dichten.
Je nach Druck auf die geformte Tülle ist eine Zugentlastung möglich; nicht benötigte Kabelaufnahmen können durch Blindstopfen verschlossen werden.

Im folgenden wird der Stand der Technik bezogen auf die Kabel-/Leitungs-/ Schlauchverschraubungen gewürdigt.

Die deutsche Patentanmeldung DE 694 13 494/europäische Patentschrift 651 486 nennt Verbesserungen an Dichtungsanordnungen für eine Kabelverschraubung für die Luft- und Raumfahrt bei Durchgang von druckbehafteten in drucklose Räume oder umgekehrt derart, daß der bisher eingesetzte, kabelführende und durch Silikonkautschuk druckgedichtete Elastomerstöpsel durch eine die Dichtungsmasse aufnehmende Kabeldichtungsbuchse mit Trennwandgehäuse ersetzt wird.
Die Druckdifferenzen zwischen den Trennwänden übersteigen bei weitem die angesprochenen, atmosphärischen Druckverhältnisse normaler, industrieller Anwendungen.

Gebrauchsmuster DE 210 09 112 offenbart einen Dichteinsatz für Kabelverschraubungen, der an der Stelle der Kabeleinführung eine Dichtlippe besitzt und die Dichtlippe in eine Membran übergeht, die den Einsatz verschließt, bis das Kabel eingeführt ist.
Derartige Dichteinsätze, -tüllen oder -stöpsel wurden bereits oben diskutiert.

Gebrauchsmuster DE 76 22 470 stellt eine Vorrichtung zur Kabelverschraubung mit

Dichtung, Zugentlastung und Verdrehungssicherung im montierten Zustand vor, die sich durch einen besonders einfachen Aufbau, einen geringen Raumbedarf und die Unverlierbarkeit der Teile auszeichnet und dabei ein sicheres Abdichten und Verspannen von Kabeln, Leitungen, Schläuchen, o.ä. mit unterschiedlichen Durchmessern bei Gehäusen und durch Trennwände ermöglicht.
Eine Feuchtekompensation durch Taupunkt/Klimawechsel wird nicht berücksichtigt.

Das deutsche Gebrauchsmuster DE 297 23 774/Patentschrift DE 197 42 178 beschreibt eine dichte, elektrische Gehäusedurchführung durch eine Gehäusewand aus Kunststoff aus dem Automobilbereich, bei der die Leiter als Leiterbahnen mit dem Gehäuse kunststoffumspritzt werden. Zwischen den Innen- und Außenanschlüssen können die Leiterbahnen entflochten werden.
Das Schutzrecht erhebt nur Anspruch auf die dichte Kabeldurchführung.

Aus dem Bereich der Automobiltechnik gibt es eine Reihe von Anmeldungen bezogen auf die Leitungsdurch- und -einführung durch Trennwände und in Gehäuse (s.a. Patentschrift DE 37 01 597, Offenlegung DE 25 42 040, s.o.).
In diesem Zusammenhang stellt das Gebrauchsmuster DE 296 00 805 eine dichtende Tülle, insbesondere bei Leitungsdurchführungen im Automobilbereich vor. Offenlegungsschrift DE 103 32 035 beschreibt eine Dichtungstülle für eine Leitungsdurchführung in einer Wandung.
Die Offenbarungen dienen dem Schutz der Isolation der Leitungen/Kabel.

In der Offenlegungsschrift DE 101 28 380 wird eine Leitungsdurchführung mit einem zweiteiligen Dichtelement vorgestellt, bei dem ein Dichtpreßdruck auf das Dichtelement in axialer Richtung ausgeübt wird; außen ist das Dichtelement konisch geformt. Verwendung soll das Teil bei der Durchführung von Kabeln und/oder Rohren durch Mauerwände o.dgl. finden.
Luftdruckausgleichsmaßnahmen zwischen denen durch Trennwände getrennte Räume sind nicht vorgesehen.

Diese Anschluß-, Schalt- und Verteilerkästen - so sie nicht Innen vollkommen vergossen sind - unterliegen - sowohl bei Anwendungen im Innen- wie im Außenbereich physikalischen Gesetzen, wie der Bildung von Innenfeuchtigkeit bis Wasser aufgrund von Temperatur- und Druckwechseln, Stichwort Taupunkt-Wasserbildung. Bei preissensiblen Anwendungen im Außenbereich wird der Hohlkörper des Anschluß-, Schalt- und Verteilerkastens mit wasserabführenden Durchgangsbohrungen versehen. In der Installationstechnik werden häufig - schutzartabhängig - diese Bohrungen durch Filter, Labyrinthe, Membrane, Schikanen oder Ventile ergänzt, um von Außen eindringendes Wasser abzuweisen. Bei Applikationen der Verkehrstechnik hilft der teure, nicht umweltfreundliche Gehäuse-Innenverguß unter Luftabschluß. Eine preiswerte, alternative Lösung stellt die Schaffung von semipermeablen Gehäuseöffnungen dar. Hierbei werden die Gehäuseöffnungen durch Filter ergänzt, die nur in einer Richtung eine Öffnung durch Mikroporen aufweisen, Filter/Membranventile.

Im folgenden wird der Stand der Technik bezogen auf die Filter-/Membrantechnik in Bezug auf ein Elektrogerät gewürdigt.

Gemäß deutscher Anmeldung DE 100 53 681/europäische Anmeldung EP 1 202 616 wird ein Ventilelement für ein Elektronikgehäuse vorgeschlagen, welches zusätzlich die Eigenschaft einer elektromagnetischen Abschirmung besitzt. Das Element besteht aus einem offenen, gedeckelten zylinderförmigen Plastikgehäuse mit Befestigungsgewinde, wobei der sich ergebende innen liegende Kanal mit einer mikroporösen, wasserfesten und gasdurchlässigen Membran abgeschlossen wird. Die abschirmenden Eigenschaften werden dem Element dadurch gegeben, daß die Plastikteile - Korpus und Deckel - mit einer metallisierten Oberfläche beschichtet werden, die aus mehrfachen Lagen elektrisch leitender Materialien bestehen.
Die Offenbarung stellt ein elektromagnetisch abschirmendes Ventilelement für die Gehäuseentlüftung eines Elektronikgehäuses dar; eine Kabelein- oder -durchführung ist nicht vorgesehen.
Alle vorgestellten Veröffentlichungen eignen sich nur bedingt oder gar nicht für den spezifischen Einsatz einer atmungsaktiven Kabel-/Schlauchdurchführung.

Der Erfindung liegt daher die Aufgabe zu Grunde, eine Einrichtung nach dem Oberbegriff des Anspruchs 1, eine atmungsaktive Kabel-/Schlauchdurchführung zur mechanisch und einseitig hydroskopisch dichten Durchführung eines geschirmten oder ungeschirmten elektrischen Kabels mit/ohne Zugentlastung mit/ohne Biegeschutz für dieses Kabel zu schaffen.

Diese Aufgabe wird erfindungsgemäß dadurch gelöst, daß die Kabel-/Schlauchdurchführung durch einen, mit einem semipermeablen Filter/Membranventil abgeschlossenen Luftkanal ausgestattet und atmungsaktiv ist.

Werden Anschluß-, Schalt- und Verteilerkästen der Installations-/Gerätetechnik der Gebäudesystem-, Anlagen-, Verkehrs-, Automobiltechnik, etc. in Außenräumen oder Räumen mit unterschiedlichen Temperaturgefällen verbaut, bildet sich in diesen - oft luftdicht geschlossenen Gehäusen - Feuchtigkeit, welche sich als Kondenswasser im Gehäuse niederschlägt. Diese Feuchte in Verbindung mit elektrischem Strom oder auch indirekt über in den Gehäusen integrierte Elektronik führt zu Kurzschlüssen, Kriechströmen, Spannungsüberschläge durch Verkürzung von Luft- und Kriechstrekken, Zerstörung von nicht feuchtigkeitsgeschützten Teilen, wie z.B. bestückte, nicht lackierte oder vergossene Leiterplatten, Kondensatoren, Wickelgütern, etc.

Schutz bei derartigen Anwendungen kann dadurch geboten werden, daß die Gehäuse mit einem semipermeablen Durchlaß, wie einem Filter, einem Labyrinth, einer Membran, einer Schikane oder einem Ventil versehen werden. Die vorliegende Erfindung sieht vor - da derartige Gehäuse oft in eine Verkabelung eingebunden sind - die Kabeldurchführung mit einem semipermeablen Durchlaß zu kombinieren, atmungsaktive Kabel-/ Schlauchdurchführung.

Die mit der Erfindung erzielten Vorteile bestehen - neben der Verhinderung der Bildung von Feuchtigkeitsniederschlag innerhalb geschlossener Räume - insbesondere darin, daß handelsübliche, auf dem Installationsmarkt bekannte Teile verbaut werden und keine zusätzlichen Vorkehrungen getroffen werden müssen, da derartige Anwendungen oft auf minimale räumliche und gewichtsmäßige Abmessungen ausgelegt sind.

Bevorzugte Ausführungsbeispiele des Erfindungsgegenstands sind in den Zeichnungen dargestellt und werden im folgenden näher beschrieben. Es zeigen
- **Fig. 1**: Perspektivische Darstellung der 3-teiligen Kabeldurchführung
- **Fig. 2**: Zusammengebaute Kabeldurchführung in Seitenansicht
- **Fig. 3**: Schnitt A-A der zusammengebauten Kabeldurchführung
- **Fig. 4**: Schnitt B-B der zusammengebauten Kabeldurchführung.

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterungen der Bilder.

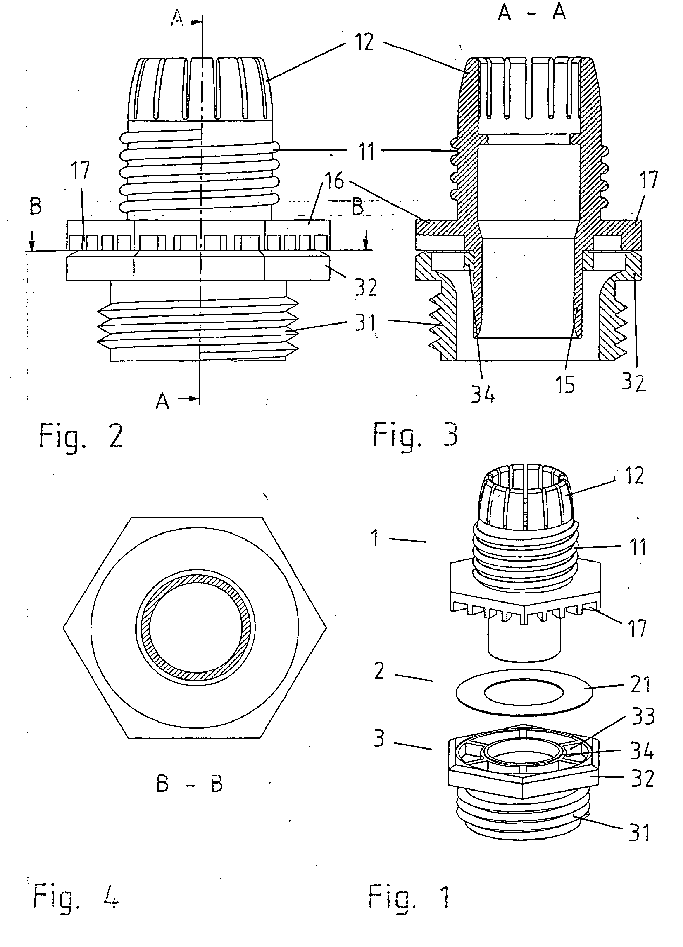

Wie aus **Fig. 1** ersichtlich, besteht die 3-teilige, semipermeable Kabel-/Schlauchdurchführung aus Oberteil **1,** Mittelteil **2** und Unterteil **3.**

Das Oberteil besteht aus dem Gewindestutzen für die Hutmutter **11** mit angespritzter Kabelkralle **12,** dem für den entsprechenden Kabelaußendurchmesser vorbereiteten Kabeldichtring **13** und der die Kabeldichtung und -zugentlastung durch Kabelquetschung hervorrufenden Hutmutter **14** (nicht dargestellt). Als Verlängerung des Gewindestutzens **11** ist die Kabelführung **15** und hälftig der als Außensechskant mit Schlüsselweite ausgeprägte Lüftungskanal **16** dargestellt. Die Rippen **17** des Lüftungskanals dienen der Stabilisierung des Filters/Membranventils **21.**

Weiterhin wird das zwischen Ober- und Unterteil, im Mittelteil **2,** fest gefügte semi-permeable Filter/Membranventil **21** in Form eines Zylinderrings gezeigt. Bei derartigen Filtern/Membranen handelt es sich meist um ein Kunststoffmaterial aus Polymer/Polypropylene oder expandierte Polytetrafluorethylene, welches durch seine symmetrische Porenstruktur hydrophobischen Charakter aufweist, eine weite chemische Verträglichkeit besitzt, für Temperaturen zwischen -40°C ... +125°C anwendbar ist und bei einer Temperatur von 23°C eine Filter-/Membrandurchlässigkeit von >10 ml/[min x cm² x bar] aufweist.

Die das Filter/Membranventil **21** haltenden Teile zwischen Ober- **1** und Unterteil **2** können auch so ausgeprägt sein, daß das semipermeable Filter-/Membranventil austauschbar gestaltet ist.
Die Formgebung des Filter-/Membranventils **21** ist mit der Formgebung des zu dichtenden Lüftungskanals **16** und **32** übereinstimmend.

Darüber hinaus ist eine Ausführungsform des Unterteils **3** der semipermeablen Kabeldurchführung dargestellt. Diese besteht aus einem metrischen Gewindestutzen **31** mit angespritztem, hälftigen Lüftungskanal als Außensechskant mit Schlüsselweite **32,** die bündig mit Schlüsselweite **16** ist. Der Außensechskant hält durch Verstrebung **33** einen Innenzylinder **34,** der als Führungs-, Stütz- und Dichtfläche für das Filter/ Membranventil dient; Außensechskant, Verstrebung und Innenzylinder bilden die Aufnahme für das/die Filter/Membran. Die Dichtung des Unterteils **3** in der Gehäusewandung erfolgt üblicherweise durch einen über den Gewindestutzen **31** gestülpten O-Ring **35** und Verschraubung in Gewinde oder mit Kontermutter (nicht dargestellt).

**Fig. 2** zeigt die zusammengebaute, semipermeable Kabeldurchführung in Seitenansicht mit den angedeuteten Schnitten A-A und B-B. Der Zusammenbau der Teile kann unterschiedlich erfolgen, wie z.B. durch Klebung, Ultraschall-Schweißung, als Einlegeteil umspritzt, etc. Weiterhin kann auch Unter- und Mittelteil durch entsprechende Vormontage und -behandlung 1-stückig werden.

Kabellose Kabeldurchführungen können durch den unvorbereiteten, geschlossenen Dichtring **13** und die verschraubte Hutmutter **14** abgedichtet werden - und wirken wie Dichtungs-ANürgenippel und/oder BlindstopfenNerschlußschraube - so daß die kabellose Kabeldurchführung auch oder zusätzlich als semipermeable Gehäuselüftung mit Membranventil genutzt werden kann.

**Fig. 3** zeigt den Schnitt A-A der zusammengebauten Kabeldurchführung.

Die Außenfläche der Kabelführung **15,** die Innenfläche des Gewindestutzens **31** bzw. der die Berandung des Lüftungskanals bildende Außensechskant **32** sowie die Innenseite des Außensechskants **16** bilden die Entlüftung der Kabeldurchführung und bestimmen dessen Volumendurchsatz in Abhängigkeit von Druck und Temperatur.

**Fig. 4** zeigt den Schnitt B-B der zusammengebauten Kabeldurchführung.

Kabeldurchführungen werden üblicherweise nach dem metrischen Gewinde des Befestigungsstutzens **31** gehandelt unter Angabe des möglichen Kabeldurchmessers **15** und der Schlüsselweite des Außensechskants **16** und **32.** Gegenüber konventionellen Kabeldurchführungen muß bei der semipermealen Kabel-/Schlauchdurchführung neuer Bauart die Querschnittsfläche bzw. die sich daraus ergebende Erweiterung von Durchmesser und Gewindemaß des Stutzens **31** berücksichtigt werden, so daß für gegebene Kabeldurchmesser **15** größere metrische Stutzenmaße **31** anzusetzen sind, die von dem geforderten Volumen/Abmessung des Lüftungskanals abhängig sind. Auch hier werden sich Normreihen von metrischen Gewindestutzen, Kabeldurchmesser und Schlüsselweiten entwickeln.

Eine weitere Ausgestaltung der Erfindung sieht vor, daß es sich bei dem Gewinde des Gewindestutzens nicht zwingend um metrisches Gewinde handeln muß, so daß die erfinderische Neuheit auch als Ersatz-/Ergänzungs-Bauteil Verwendung findet.

Eine weitere Ausprägungsform der erfinderischen Neuheit ist dadurch gegeben, daß der Gewindestutzen des Unterteils nicht geschraubt sondern rastbar haltend, durch O-Ring gedichtet mit der Wandung des Gehäuses verbunden wird.

Als alternative Zugentlastung der Erfindung ist der Einsatz einer am Oberteil seitlich geführten Madenschraube mit zwischen Stutzen und Kabelmantel angeordneter/m Dichtung und Schutz gegeben; Gewindestutzen und Kabelkralle werden zu einem Stutzen verkürzt, Dichtring und Hutmutter entfallen.

Ein um den Gewindestutzen verkürztes Oberteil ergibt sich auch, wenn die Zugentlastung über den Dichtring und durch eine entsprechend ausgeformte Kabelkralle mit Kabelbinder oder -schelle hergestellt wird; die Hutmutter entfällt.

Gemäß einer weiteren Ausprägung der Kabel-/Schlauchdurchführung wird die Zugentlastung über den Dichtring und durch eine entsprechend ausgeformte Kabelkralle und Hutkappe rastend eingerichtet.

Gemäß einer weiteren Ausgestaltung der Erfindung kann der Lüftungskanal auch unsymmetrisch ausgeprägt und angeordnet sein, entsprechend auch das semipermeable Filter/Membranventil.

Eine weitere Ausprägung der Erfindung sieht vor, daß der Lüftungskanal der Kabel-/Schlauchdurchführung mehrfach angelegt sein kann und entsprechend durch Mehrfachfilterung abgeschlossen ist.

Ein weiterer Anwendungsbezug der mehrkanaligen Lüftung liegt darin, daß die semipermeablen Filter/Membranen unterschiedliche Porosität/Durchgangszahlen aufweisen und damit für unterschiedliche Stoffe wirksam werden.

Eine weitere vorteilhafte Ausgestaltung der Erfindung ergibt sich dadurch, daß die semipermeable Kabel-/Schlauchdurchführung in ihrer Montage keiner Lageeinbauvorschrift unterliegt. Schutz vor dem Eindringen von Schmutzpartikeln oder Wasser ist gegeben; auch bei Über-Kopf-Montage ist durch abgeschrägte Kanten der Ablauf von Wasser möglich.

Eine weitere Ausgestaltung der Erfindung sieht vor, daß die semipermeable Kabel-/Schlauchdurchführung als aneinanderreihbares Kabeleinführungsmodul im Schaltschrankbau Verwendung findet.

Die zahlreichen Möglichkeiten und Vorteile der Ausgestaltung der Erfindung spiegeln sich in der Anzahl der Schutzrechtsansprüche wider.

### Bezugszeichenliste

- 1: Oberteil Kabeldurchführung

- 11: Gewindestutzen, oben
- 12: Kabelkralle
- 13: Dichtring (nicht dargestellt)
- 14: Hutmutter (nicht dargestellt)
- 15: Kabelführung
- 16: Lüftungskanal Außensechskant, oben
- 17: Stützrippe

- 2: Mittelteil Kabeldurchführung

- 21: Semipermeables Filter/Membranventil

- 3: Unterteil Kabeldurchführung

- 31: Gewindestutzen, unten
- 32: Lüftungskanal Außensechskant, unten
- 33: Verstrebung
- 34: Innenzylinder
- 35: O-Ring (nicht dargestellt)

## Patentansprüche

1. Kabel-/Schlauchdurchführung zur mechanisch und einseitig hydroskopisch dichten Durchführung eines geschirmten oder ungeschirmten elektrischen Kabels mit/ohne Zugentlastung mit/ohne Biegeschutz für dieses Kabel, **dadurch gekennzeichnet, daß** die Kabel-/Schlauchdurchführung durch einen mit einem semipermeablen Filter/Membranventil (21) abgeschlossenen Luftkanal ausgestattet und atmungsaktiv ist.

2. Kabel-/Schlauchdurchführung nach Anspruch 1, **dadurch gekennzeichnet, daß** die 3-teilige, semipermeable Kabel-/Schlauchdurchführung aus Oberteil (1), Mittelteil (2) und Unterteil (3) gefügt ist.

3. Kabel-/Schlauchdurchführung nach mindestens einem der Ansprüche 1 und 2, **dadurch gekennzeichnet, daß** das Oberteil (1) aus dem Gewindestutzen (11) für die Hutmutter (14) mit angespritzter Kabelkralle (12), dem für den entsprechenden Kabelaußendurchmesser vorbereiteten Kabeldichtring (13) und der die Kabeldichtung und -zugentlastung durch Kabelquetschung hervorrufenden Hutmutter (14) besteht, mit Verlängerung des Gewindestutzens als Kabelführung und hälftig als Außensechskant mit Schlüsselweite ausgeprägtem Lüftungskanal (16), mit den Rippen (17) des Lüftungskanals als Stabilisierung des Filters/Membranventils (21).

4. Kabel-/Schlauchdurchführung nach mindestens einem der Ansprüche 1 bis 3, **dadurch gekennzeichnet, daß** zwischen Oberteil (1) und Unterteil (3), im Mittelteil (2), ein semipermeables Filter/Membranventil (21) in Form eines Zylinderrings fest gefügt ist.

5. Kabel-/Schlauchdurchführung nach mindestens einem der Ansprüche 1 bis 4, **dadurch gekennzeichnet, daß** das Unterteil (3) der semipermeablen Kabeldurchführung aus einem metrischen Gewindestutzen (31), der mit einem übergestülptem O-Ring (35) versehen mittels Verschraubung in Gewinde oder mit Gegen-/Kontermutter in der Gehäusewandung dichtet, mit angespritztem, hälftigen Lüftungskanal als Außensechskant mit Schlüsselweite (32), die bündig mit der Schlüsselweite des Oberteils ist, besteht, wobei der Außensechskant durch Verstrebung (33) einen Innenzylinder (34) hält, der als Führungs-, Stütz- und Dichtfläche für das Filter/Membranventil (21) dient.

6. Kabel-/Schlauchdurchführung nach mindestens einem der Ansprüche 1 bis 5, **dadurch gekennzeichnet, daß** der Zusammenbau der Teile der semipermeablen Kabel-/Schlauchdurchführung mechanisch fest erfolgt, wobei auch Unterteil (3) und Mittelteil (2) durch entsprechende Vormontage und -behandlung 1-stückig wird.

7. Kabel-/Schlauchdurchführung nach mindestens einem der Ansprüche 1 bis 6, **dadurch gekennzeichnet, daß** die das Filter/Membranventil (21) haltenden Teile von Oberteil (1) und Unterteil (3), so ausgeformt sind, daß ein semipermeables Filter/Membranventil (21) austausch-/-wechselbar gestaltet ist.

8. Kabel-/Schlauchdurchführung nach mindestens einem der Ansprüche 1 bis 7, **dadurch gekennzeichnet, daß** die Formgebung des Filters/Membranventils (21) in Übereinstimmung mit der Formgebung des zu dichtenden Lüftungskanals ist.

9. Kabel-/Schlauchdurchführung nach mindestens einem der Ansprüche 1 bis 8, **dadurch gekennzeichnet, daß** kabellose Kabeldurchführungen durch den unvorbereiteten, geschlossenen Dichtring (13) und die verschraubte Hutmutter (14) abgedichtet sind und wie Dichtungs-/Würgenippel und/oder Blindstopfen/Verschlußschraube wirken.

10. Kabel-/Schlauchdurchführung nach mindestens einem der Ansprüche 1 bis 9, **dadurch gekennzeichnet, daß** die Außenfläche der Kabelführung (15), die Innenfläche des Gewindestutzens (31) bzw. der die Berandung des Lüftungskanals bildende Außensechskant (32) sowie die Innenseite des Außensechskants (16) die Entlüftung der Kabeldurchführung bilden und dessen Volumendurchsatz in Abhängigkeit von Druck und Temperatur bestimmt.

11. Kabel-/Schlauchdurchführung nach mindestens einem der Ansprüche 1 bis 10, **dadurch gekennzeichnet, daß** bei der semipermeablen Kabel-/Schlauchdurchführung die Querschnittsfläche bzw. die sich daraus ergebende Erweiterung von Durchmesser und Gewindemaß des Stutzens so bemessen ist, daß für gegebene Kabeldurchmesser größere metrische Stutzenmaße (31) anzusetzen sind, die von dem geforderten Volumen/Abmessung des Lüftungskanals abhängen.

12. Kabel-/Schlauchdurchführung nach mindestens einem der Ansprüche 1 bis 11, **dadurch gekennzeichnet, daß** es sich bei dem Gewinde des Gewindestutzens (31) nicht zwingend um metrisches Gewinde handelt.

13. Kabel-/Schlauchdurchführung nach mindestens einem der Ansprüche 1 bis 12, **dadurch gekennzeichnet, daß** der Gewindestutzen (31) des Unterteils (3) nicht geschraubt sondern rastbar haltend, durch O-Ring(35) gedichtet mit der Wandung des Gehäuses verbunden ist.

14. Kabel-/Schlauchdurchführung nach mindestens einem der Ansprüche 1 bis 13, **dadurch gekennzeichnet, daß** eine am Stutzen (11) des Oberteils (1) senkrecht zur Kabelführung geführte Madenschraube mit zwischen Stutzen und Kabelmantel angeordneter Dichtung mit Kabelschutz die Kabelführung und Zugentlastung bildet.

15. Kabel-/Schlauchdurchführung nach mindestens einem der Ansprüche 1 bis 14, **dadurch gekennzeichnet, daß** die Zugentlastung über den Dichtring (13) und durch eine entsprechend ausgeformte Kabelkralle (12) mit Kabelbinder oder -schelle hergestellt ist.

16. Kabel-/Schlauchdurchführung nach mindestens einem der Ansprüche 1 bis 15, **dadurch gekennzeichnet, daß** die Zugentlastung über den Dichtring (13) und durch eine entsprechend ausgeformte Kabelkralle (12) und Hutkappe rastend eingerichtet ist.

17. Kabel-/Schlauchdurchführung nach mindestens einem der Ansprüche 1 bis 16, **dadurch gekennzeichnet, daß** der Lüftungskanal und entsprechend auch das semi-permeable Filter/Membranventil (21) unsymmetrisch ausgeprägt und angeordnet sind.

18. Kabel-/Schlauchdurchführung nach mindestens einem der Ansprüche 1 bis 17, **dadurch gekennzeichnet, daß** der Lüftungskanal der Kabel-/Schlauchdurchführung mehrfach angelegt und entsprechend durch mehrere Filter/Membranventile (21) abgeschlossen ist.

19. Kabel-/Schlauchdurchführung nach mindestens einem der Ansprüche 1 bis 18, **dadurch gekennzeichnet, daß** semipermeable Filter/Membranventile (21) unterschiedliche Porosität/Durchgangszahlen aufweisen und damit für unterschiedliche Medien wirksam sind.

20. Kabel-/Schlauchdurchführung nach mindestens einem der Ansprüche 1 bis 19, **dadurch gekennzeichnet, daß** die semipermeable Kabel-/Schlauchdurchführung über abgeschrägte Kanten an den Austrittsöffnungen verfügt und montagemäßig keiner Lageeinbauvorschrift unterliegt.

21. Kabel-/Schlauchdurchführung nach mindestens einem der Ansprüche 1 bis 20, **dadurch gekennzeichnet, daß** die semipermeable Kabel-/Schlauchdurchführung als aneinanderreihbares Kabeleinführungsmodul ausgeprägt ist.

## Claims

1. A cable/hose bushing for the mechanically and unilaterally hydroscopically tight iced-through of a shielded or unshielded electrical cable with/without strain relief with/without bending protection for this cable, **characterised in that** the cable/hose bushing is fitted with an air channel closed by a semipermeable filter/membrane valve (21) and is breathable.

2. The cable/hose bushing according to claim 1, **characterised in that** the thrce-part, semi-permeable cable/hose bushing is composed of an upper part (1), middle part (2) and lower part (3).

3. The cable/hose bushing according to at least one of claims 1 and 2, **characterised in that** the upper part (1) consists of a threaded connection piece (11) for the cap nut (14) with a moulded-on cable clamp (12)??, the cable sealing ring (13) prepared for the corresponding cable outside diameter and the cap nut (14) which produces the cable seal and strain relief by compression of the cable, comprising an extension of the threaded connection piece as a cable guide and a ventilation channel (16) half formed as an external hexagon having a width across flats, comprising the ribs (17) of the ventilation channel as stabilisation of the filter/membrane valve(21).

4. The cable/hose bushing according to at least one of claims 1 to 3, **characterised in that** between the upper part (1) and lower part (3), a semipermeable filter/membrane valve (21) in the form of a cylinder ring is firmly joined in the middle part (2).

5. The cable/hose bushing according to at least one of claims 1 to 4, **characterised in that** the lower part (3) of the semi-permeable cable bushing consists of a metric threaded connection piece (31) which is provided with an inverted O-ring (35) and seals by means of screwing into the thread or with a counter/lock nut in the casing wall, comprising a moulded-on half ventilation channel as an external hexagon having a width across flats (32) which is flush with the width across flats of the upper part, wherein the external hexagon holds the inner cylinder (34) by means of bracing (33) which serves as a guiding, supporting or sealing surface of the filter/membrane valve (21).

6. The cable/hose bushing according to at least one of claims 1 to 5, **characterised in that** the parts of the semi-permeable cable/hose bushing are assembled mechanically fixed, wherein the lower part (3) and middle part (2) becomes one-piece through corresponding pre-assombly and treatment.

7. The cable/hose bushing according to at least one of claims 1 to 6, **characterised in that** the parts of the upper part (1) and lower part (3) holding the filter/membrane valve (21) are formed so that a semi-permeable filter/membrane valve (21) is exchangeable/replaceable.

8. The cable/hose bushing according to at least one of claims 1 to 7, **characterised in that** the shaping of the filter/membrane valve (21) is in accordance with the shaping of the ventilation channel to be sealed.

9. The cable/hose bushing according to at least one of claims 1 to 8, **characterised in that** cableless cable bushings are sealed by the unprepared closed sealing ring (13) and the screwed cap nut (14) and act as a sealing/twisted nipple and/or as a blind-stop/locking screw.

10. The cable/hose bushing according to at least one of claims 1 to 9, **characterised in that** the outer face of the cable guide, the inner face of the threaded connection piece (31) or the external hexagon (32) forming the rim of the ventilation channel as well as the inner side of the external hexagon (16) form the ventilation of the cable bushing and determine its volume throughput depending on pressure and temperature.

11. The cable/hose bushing according to at least one of claims 1 to 10, **characterised in that** in the semi-permeable cable/hose bushing the cross-sectional area or the resulting expansion of diameter and thread size of the connection piece are dimensioned so that for given cable diameters larger metric connection piece dimensions (31) are to be assumed which depend on the required volume/dimension of the ventilation channel.

12. The cable/hose bushing according to at least one of claims 1 to 11, **characterised in that** the thread of the threaded connection piece (31) is not necessarily a metric thread.

13. The cable/hose bushing according to at least one of claims 1 to 12, **characterised in that** the threaded connection piece (31) of the lower part (3) is connected to the wall of the casing not by screwing but is held lockably, sealed by an O-ring (35).

14. The cable/hose bushing according to at least one of claims 1 to 13, **characterised in that** a setscrew guided on the connection piece (11) of the upper part (1) perpendicularly to the cable guide with a seal disposed between the connection piece and cable jacket with cable protection forms the cable guide and strain relief.

15. The cable/hose bushing according to at least one of claims 1 to 14, **characterised in that** the strain relief is produced via the sealing ring (13) and a suitable formed cable scallop (12) with cable ties or cable clips.

16. The cable/hose bushing according to at least one of claims 1 to 15, **characterised in that** the strain relief is provided via the scaling ring (13) and in a locking manner by a suitably formed cable scallop (12) and cap.

17. The cable/hose bushing according to at least one of claims 1 to 16, **characterised in that** the ventilation channel and accordingly the semi-permeable filter/membrane (21) are asymmetrically formed and arranged.

18. The cable/hose bushing according to at least one of claims 1 to 17, **characterised in that** the ventilation channel of the cable/hose bushing is applied in a plurality and is therefore sealed by a plurality of filter/membrane valves (21).

19. The cable/hose bushing according to at least one of claims 1 to 18, **characterised in that** semi-permeable filter/membrane valves (21) have different porosity/passage numbers and thus are effective for different media.

20. The cable/hose bushing according to at least one of claims 1 to 19, **characterised in that** the semi-permeable cable/hose bushing has sloping edges at the outlet openings and is not subjected to any positional installation regulations in terms of assembly.

21. The cable/hose bushing according to at least one of claims 1 to 20, **characterised in that** the semi-permeable cable/hose bushing is formed as a cable insertion module capable of being arranged in rows.

## Revendications

1. Traversée de câblo/de flexible pour la traversée mécanique et unilatéralement hydroscopique d'un câble électrique blindé ou non blindé avec/sans décharge en traction, avec/sans protection contre la flexion pour ledit câble, **caractérisée en ce que** la traversée de câble/de flexible est équipée d'un conduit de ventilation fermé par un filtre/une soupape à diaphragme (21) et **en ce qu'**elle est respirante.

2. Traversée de câble/de flexible selon la revendication 1, **caractérisée en ce que** la traversée de câble/de flexible semi-perméable en 3 éléments est assemblée d'une partie supérieure (1), d'une partie centrale (2) et d'une partie inférieure (3).

3. Traversée de câble/de flexible selon au moins l'une quelconque des revendications 1 et 2, **caractérisée en ce que** la partie supérieure (1) consiste dans la tubulure filetée (11) pour l'écrou borgne à calotte (14) avec griffe de câble (12) moulée par injection, dans la bague d'étanchéité pour câble (13) préparée pour le diamètre extérieur de câble correspondant et dans l'écrou borgne à calotte (14) provoquant l'étanchéité du câble et sa décharge en traction par écrasement du câble avec rallonge de la tubulure filetée en tant que chemin de câble et pour moitié en tant qu'hexagone mâle avec conduit de ventilation (16) étendu à surplat, avec les nervures (17) du conduit de ventilation, en tant que stabilisation du filtre/de la membrane à diaphragme (21).

4. Traversée de câble/de flexible selon au moins l'une quelconque des revendications 1 à 3, **caractérisée en ce qu'**entre la partie supérieure (1) et la partie inférieure (3), un filtre/une membrane à diaphragme (21) sous forme d'une bague cylindrique est fixement assemblé (e) dans la partie centrale (2).

5. Traversée de câble/de flexible selon au moins l'une quelconque des revendications 1 et 4, **caractérisée en ce que** la partie inférieure (3) de la traversée de câble semi-perméable consiste dans une tubulure filetée métrique (31), qui avec un joint torique (35) retourné dessus assure l'etanchéité dans la paroi du boîtier au moyen d'un boulonnage dans un filetage ou avec des contre-écrous, avec un demi conduit de ventilation moulé par injection en tant qu'hexagone mâle à surplat (32) qui affleure le surplat de la partie supérieure, l'hexagone mâle maintenant par entretoisement (33) un cylindre intérieur (34), servant de surface de guidage, d'appui et d'étanchéité pour le filtre/la membrane à diaphragme (21).

6. Traversée de câble/de flexible selon au moins l'une quelconque des revendications 1 à 5, **caractérisée en ce que** l'assemblage des pièces de la traversée de câble/de flexible semi perméable est assurée solidement par voie mécanique, la partie inférieure (3) et la partie centrale (2) devenant monobloc par prémontage et prétraitement correspondants.

7. Traversée de câble/de flexible selon au moins l'une quelconque des revendications 1 à 6, **caractérisée en ce que** les pièces de la partie supérieure (1) et de la partie inférieure (3) maintenant le filtre/la membrane à diaphragme (21) sont conformées de sorte à former un filtre/une membrane à diaphragme (21) semi-perméable en version interchangeable/remplaçable.

8. Traversée de câble/de flexible selon au moins l'une quelconque des revendications 1 à 7, **caractérisée en ce que** la conformation du filtre/de la membrane à diaphragme (21) est en concordance avec la conformation du conduit de ventilation dont il faut assurer l'étanchéité.

9. Traversée de câble/de flexible selon au moins l'une quelconque des revendications 1 à 8, **caractérisée en ce que** des traversées de câble sans câble sont rendues étanches par le anneau d'étanchéité (13) fermée, non préparée et par l'écrou borgne à calotte (14) vissé et agissent comme un raccord auto-obturateur et/ou un tampon borgne/une vis de fermeture.

10. Traversée de câble/de flexible selon au moins l'une quelconque des revendications 1 à 9, **caractérisée en ce que** la surface extérieure de la traversée de câble (15), la surface de la tubulure filetée (31) ou l'hexagone mâle (32) formant le conduit de ventilation, ainsi que la face intérieure de l'hexagone mâle (16) forment la purge de la traversée de câble et déterminent son débit volumétrique, en fonction de la pression et de la température.

11. Traversée de câble/de flexible selon au moins l'une quelconque des revendications 1 à 10, **caractérisée en ce que** sur la traversée de câble/de flexible semi-perméable, la surface de section transversale, respectivement l'élargissement qui en résulte du diamètre et de la dimension du filetage de la tubulure est dimensionné(e) de sorte que pour des diamètres de câble donnés, des dimensions de tubulure métrique (31) plus importantes doivent être montées, qui dépendent du volume/de la dimension requis(e) pour le conduit de ventilation.

12. Traversée de cable/de flexible selon au moins l'une quelconque des revendications 1 à 11, **caractérisée en ce que** le filetage de la tubulure filetée (31) n'est pas forcément un filetage métrique.

13. Traversée de câble/de flexible selon au moins l'une quelconque des revendications 1 à 12, **caractérisée en ce que** la tubulure filetée (31) de la partie inférieure (3) n'est pas reliée par vissage mais tenue par enclenchement, rendue étanche par le joint torique (35) avec la paroi du boîtier.

14. Traversée de câble/de flexible selon au moins l'une quelconque des revendications 1 à 13, **caractérisée en ce qu'**une vis sans tête guidée sur la tubulure (11) de la partie supérieure (1), à la perpendiculaire de la traversée de câble forme avec une garniture d'étanchéité disposée entre la tubulure et la gaine de câble avec protège-câble la traversée de câble et la décharge en traction.

15. Traversée de câble/de flexible selon au moins l'une quelconque des revendications 1 à 14, **caractérisée en ce que** 1 a décharge en traction est assurée par le anneau d'étanchéité (13) et par une griffe de câble (12) conformée en conséquence avec attache de câble ou collier de câble.

16. Traversée de câble/de flexible selon au moins l'une quelconque des revendications 1 à 15,
**caractérisée en ce que** la décharge en traction est établie par enclenchement, par l'intermédiaire de la bague d'étanchéité (13) et d'une griffe de câble (12) conformée en conséquence et d'une calotte.

17. Traversée de câble/de flexible selon au moins l'une quelconque des revendications 1 à 16, **caractérisée en ce que** le conduit de ventilation et en conséquence également le filtre/la membrane à diaphragme (21) semi-perméable s'étendent et sont disposés de façon asymétrique.

18. Traversée de câble/de flexible selon au moins l'une quelconque des revendications 1 à 17, **caractérisée en ce que** le conduit de ventilation de la traversée de câble/de flexible est posé plusieurs fois et terminé en conséquence par plusieurs filtres/membranes à diaphragme (21).

19. Traversée de câble/de flexible selon au moins l'une quelconque des revendications 1 à 18, **caractérisée en ce que** des filtres/membranes à diaphragme (21) semi-perméables présentent une porosité/des nombres de passage différents et sont donc efficaces pour différents milieux.

20. Traversée de câble/de flexible selon au moins l'une quelconque des revendications 1 à 19, **caractérisée en ce que** la traversée de câble/de flexible semi-perméable dispose d'arêtes chanfreinées sur les ouvertures de sortie et n'est soumise au niveau du montage à aucune prescription en matière de position de montage.

21. Traversée de câble/de flexible selon au moins l'une quelconque des revendications 1 à 20,
**caractérisée en ce que** la traversée de câble/de flexible semi-perméable s'étend sous la forme d'un module d'introduction de câble disposable en rangées.
